# EUROPEAN PATENT SPECIFICATION

(11) **EP 4 472 445 B1**
(45) Date of publication and mention of the grant of the patent: **01.10.2025**
(21) Application number: 23703366.7
(22) Date of filing: 31.01.2023
(51) Int. Cl.: A23P 30/20, A23J 3/22, A23J 3/26

(54) **A NEW CONTINUOUS HIGH SHEAR PROCESS**
NEUES KONTINUIERLICHES VERFAHREN MIT HOHER SCHERUNG
NOUVEAU PROCÉDÉ CONTINU DE CISAILLEMENT ÉLEVÉ

(30) Priority: 31.01.2022 NL 2030796
(43) Date of publication of application: 11.12.2024
(73) Proprietor: DST Holding B.V., 6222 NJ Maastricht (NL)
(72) Inventor: TOURNOIS, Huibert, 6222 NJ Maastricht (NL); LEKNER, Gilis Anne-Maria Victor, 6222 NJ Maastricht (NL); LEKNER, Julian Wilhelmus Maria, 6222 NJ Maastricht (NL); DE HEIJ, Wouter Bernardus Cornelius, 6222 NJ Maastricht (NL)
(74) Representative: EDP Patent Attorneys B.V.
(86) International application number: PCT/NL2023/050041
(87) International publication number: WO 2023/146405

(56) References cited:
- WO-A1-2017/174517
- WO-A1-2022/101508
- US-A1- 2009 068 336
- PLATTNER ET AL: "Extrusion techniques for meat analogues", CEREAL FOODS WORLD, AMERICAN ASSOCIATION OF CEREAL CHEMISTS, AACC, ST. PAUL, MN., USA, vol. 65, no. 4, 1 July 2020 (2020-07-01), XP009527206, ISSN: 0009-0360, [retrieved on 20201022], DOI: 10.1094/CFW-65-4-0043

## Description

### FIELD OF THE INVENTION

The invention relates to a method and system for continuously processing a polymer comprising material. The invention further relates to a product produced using a high shear process.

### BACKGROUND OF THE INVENTION

Systems and methods to process polymers or biopolymers at high shear are known in the art. WO2017174517, e.g., describes a process for preparing a shelf-stable protein snack. More specifically the disclosure relates to a process for preparing a shelf-stable protein snack with a fibrous appearance and a crunchy texture, characterized in that the process is completely free of an extrusion step. The disclosure relates also to the shelf-stable protein snack obtained by the process.

Very often extrusion systems are being employed for mixing, shearing, and forming products from polymers and biopolymers such as proteins and starches. WO2016/150834 for instance relates to a process for preparing a meat-analogue food product and describes in a process for preparing a meat-analogue food product, comprising the steps of: a) feeding an extruder barrel with 40-70 wt% water and 15-35 wt% plant protein; b) injecting 2-15 wt%, preferably 2-10 wt%, liquid oil, fat or a combination thereof into the extruder barrel at a location down-stream of the feeding location of step a); c) extruding the mixture through a cooling die. The document further describes a meat-analogue food product obtainable by the process. Further, US2009068336 describes methods for producing meat analog as well as formulations. The production method uses a device designed to texturize the product while providing superior heat transfer for cooking. The device includes a helical compression conveyer with internal and external heating sources that delivers a high ratio of surface area for heat transfer to product volume. This results in the device being capable of heating of the emulsion volume as it is moved from the inlet to the outlet of the device to form a meat analog within the device in which the meat analog is formed in multiple segments to result in the meat analog having a defined surface texture. Moreover, in "Extrusion techniques for meat analogues", Cereal Foods World (July-August 2020), vol. 65 (4), Plattner et al disclose various extrusion processes for producing products comprising fibrous structure (meat analogues) including thermal extrusion (PowerHeater) processing, which comprises pumping a hydrated emulsion comprising protein, carbohydrate, fiber and fat through a PowerHeater device wherein the emulsion is heated by indirect thermal energy to set the structure.

### SUMMARY OF THE INVENTION

Recent changes in consumers attitude regarding health, ethical and sustainability aspects of meat consumption have led to an exponentially growing demand for plant-based meat analogues. Demand is met by an expanding range of meat analogues with ever increasing quality. Unlike vegetarians, the group of flexitarians do not wish to compromise on the typical meat taste and texture. To this end producers of meat analogues managed to create anisotropic structure that mimic the characteristic structure and texture of meat, as well as blood analogues and fat analogues to complete the emulation.

Protein rich products such as tofu and tempeh have been consumed in East-Asia for centuries but in Western countries, introduction of meat analogues with meat like experience, started in the early 1960s with the production of dry texturized vegetable protein (TVP) by means of extrusion cooking. TVP's are made of usually defatted soy meal, soy protein concentrate or wheat gluten and have an elastic and spongy texture. Other approaches to mimic the fibrous and elastic meat structure were launched around the same time from mycoproteins and milk proteins. To discriminate these products, they were coined 'second generation' meat replacers. In the early 1990s, research on the High Moisture Extrusion Cooking introduced a new means to texturing food proteins into fibrous structures and textures that mimic muscle meat, generating its characteristic bite and mouthfeel, designated as third generation.

Over the decennia, knowledge on HME(C) and post extrusion processes, suitable raw materials and the influence and interaction of other functional ingredients and flavoring as well as preservation solutions, have opened the way for new product development and a wide range of third generation products. However, extrusion remains a highly complex technology relying both in process as well as product development more on empirical, trial- and-error type of experimenting. This also makes HME(C) processes very difficult to scale up.

Yet, extrusion, usually twin-screw extrusion, has been the technology of choice to manufacture fibrous meat-like products with desired anisotropic structures. In extrusion, materials are mixed with water and conveyed by two screws, generally contained in a tight-fitting barrel, thereby generating heat by viscous dissipation and shear. The screw configuration by geometry of the screw elements, determines various zones along the screw, displaying distinctive functions (e.g. mixing, hydrating, thermo-mechanical processing and pressure block for pressure build up). At the end of the barrel, pressure builds to a maximum and the material is pushed out of the barrel through the cone-shaped transition zone and pressed through the die, a narrow orifice at the end of the barrel, or through a breaker plate, a perforated steel disks, that is deployed to ensure a homogeneous pressure distribution and is thought to align the flow before it enters the die. Depending on the water content one may distinguish Low Moisture Extrusion (LME; water content < 40%) or High Moisture Extrusion (HME(C); water content > 40% usually 50 to 70%). In HME(C) a longer cooling die is used which cools the dough to around boiling temperature.

Although extrusion proved powerful technology, it also proved unruly and tough. Some commonly mentioned examples of disadvantages of extrusion are for instance: highly complex process with large dependence on type of extruder and trial and error on conditions; (up)scaling proves difficult: endogenic heat production through shear and viscous dissipation and external heating or cooling of zones in the extruder, dependent on many parameters that all scale differently according to e.g. surface to volume relations; extrusion deploys large forces and introduces high specific mechanical energy (SME, i.e. energy per kg processed material) for which it is not clear if this is efficiently used (e.g. there is multiple breaking and making of chemical structures and chemical bonds, excessive shear and viscous dissipation and increased shear to keep pressure in the system); the relevant process parameters are highly interdependent: heat-shear-viscosity-residence time-throughput-pressure-water content etc., and make it difficult or impossible to change one without concomitantly changing the others. due to the large forces deployed in high-tech shearing process, extruders represent a considerable investment, CAPEX as well as OPEX, and require skilled personnel and technical services.

It is assumed that most important limitation to the large-scale breakthrough of meat analogues in the transition towards plant-based proteins, is the availability of novel technologies without the important disadvantages to extrusion, for realization of the characteristic bite and mouthfeel at lower cost.

Moreover, the controllability of many processes nowadays caried out in an extruder may be improved by the method and system described herein, thereby taking away disadvantages of extrusion for all kinds of processing and products.

Hence, it is an aspect of the invention to provide an alternative method/process and/or a system, which preferably further at least partly obviates one or more of above-described drawbacks. It is a further aspect of the invention to provide a (food) product, especially comprising a fibrous structure, which preferably further at least partly obviates one or more of above-described drawbacks. The present invention may have as object to overcome or ameliorate at least one of the disadvantages of the prior art, or to provide a useful alternative.

In a first aspect, the invention provides a process as defined in claim 1, which is a continuous process for production of a product from a base material, wherein the base material is a protein-comprising material. The process comprises a transport stage and a high shear stage, and a forming stage. The transport stage comprises: transporting the base material in a transport direction through the container, and discharging treated base material (at a discharge port) from the container. The transport stage especially comprises imposing a pressure difference over the base material in the container. The pressure difference may be defined between a feeding pressure (P_{f}) and a discharge pressure (P_{d}), especially at an inlet port and a discharge port of the container, respectively. The transport stage comprises providing the base material with a feeding pressure (P_{f}) (via an inlet port) into a container. Transporting the base material and discharging the treated base material is based on (is especially a result of) a pressure difference between the feeding pressure (P_{f}) and a discharge pressure (P_{d}), especially at a discharge port of the container. A flow (rate) of the base material in the container is controlled by controlling the pressure difference between the feeding pressure (P_{f}) and the discharge pressure (P_{d}). In further embodiments the flow (rate) of the base material is controlled by controlling the pressure difference. The (imposed) pressure difference may especially control transport of the base material through the container, and especially (also) through the forming system. In specific embodiments, the feeding pressure (P_{f}) may be an elevated pressure, especially having value higher than 1 bara, such as at least 5 bara, especially at least 10 bara, even more especially at least 25 bara. The transport stage especially comprises providing a pressure to the base material that (gradually) reduces (in a downstream direction) from the inlet port to the discharge port of the container, and especially does not increase in the downstream direction in the container. Further, the high shear stage comprises: while transporting the base material through the container (i) controlling a shear stage temperature (Tₛ) of the base material in the container and (ii) providing a specific mechanical energy ("SME") to the base material (in the container) to treat the base material in the container (to provide treated base material at the discharge port). The specific mechanical energy may especially be selected to transform the base material and alter characteristics of the treated base material relative to untreated base material. The specific mechanical energy, especially a magnitude of the specific mechanical energy, (optionally in combination with the shear stage temperature) may be selected to align molecules in the base material. In further embodiments, the specific mechanical energy may be selected to change microstructures in the base material. The specific mechanical energy (and/or the shear stage temperature) may in further embodiments be selected to at least partly melt the base material. The specific mechanical energy is selected to provide (at total mechanical energy of) 25 Whr - 400 Whr (90 kJ - 1440 kJ) per kg of base material. In further embodiments, especially the specific mechanical energy may be controlled by controlling a shear force provided to the base material as a function of the flow (rate) of the base material. In specific embodiments, the method comprises controlling the SME by controlling one or more of the shear force provided to the base material and the flow (rate) of the base material. The high shear is provided to the base material by rotating a high shear tool in the container around a (virtual) rotational axis, wherein the rotational axis is configured parallel to the transport direction, and wherein the base material is sheared between a wall of the container and the (rotating) high shear tool. At maximum 15 %, especially at maximum 5% of the total energy required for transporting the base material through the container is provided by the high shear tool. Further, the shear stage temperature Tₛ is set in the range of 65-150 °C. Further, the forming stage comprises: guiding the treated base material from (the discharge port of) the container through a forming system while controlling a forming temperature (T_{f}) of the treated base material in the forming system, to provide the product at an exit (or second end) of the forming system. The term "forming temperature (T_{f})" may refer to a single temperature and/or a plurality of temperatures (T_{f}) or e.g. a (forming) temperature profile (or "FTP"). In further embodiments, the forming stage may comprise guiding the (treated) base material from (the discharge port of) the container through the forming system while controlling a forming temperature profile (FTP) of treated base material over the forming system, especially to provide the product at an exit of the forming system. According to the invention the base material is a protein-comprising material and the product comprises a fibrous structure. In further specific embodiments, the process comprises controlling (one or more of) the feeding pressure (Fₚ), the shear stage temperature (Tₛ), (the magnitude or value of) the specific mechanical energy (SME), and the forming temperature (T_{f}) (substantially) independent from each other.

In a further aspect, the invention provides a system as defined in claim 11 for production of a product comprising a fibrous structure from a protein-comprising base material. The system comprises a transport system, a high shear device comprising a container and temperature control system. The system further comprises a forming system. The container comprises a high shear tool. The high shear tool is configured rotatably around a (virtual) rotational axis, and configured parallel to a longitudinal axis of the container. Further especially, the container comprises an inlet port and a discharge port. The forming system comprises a forming temperature control system. Further especially, the forming system may in further embodiments comprise a forming element. A first end of the forming device is fluidly connected to a discharge port of the container, and a second end of the forming device is open. Further, the transport system is configured for providing the base material at a feed pressure (P_{f}) via an inlet port into the container, transporting the base material through the container and discharging treated base material via a discharge port from the container at a discharge pressure (P_{d}). The transport system is further configured for controlling a flow (rate) of the base material in the container by controlling a pressure difference between the feeding pressure (P_{f}) and the discharge pressure (P_{d}). The transport system is especially configured upstream of the container. Further, especially the system is configured for providing a pressure to the base material that (gradually) reduces from the inlet port to the discharge port of the container, and especially does not increase in a downstream direction in the container. The high shear tool is configured for providing the SME to the base material in the container by shearing the base material between a wall of the container and the high shear tool, wherein the shear element is configured at an angle of -10° to +10° relative to the longitudinal axis of the container. The high shear tool comprises one or more shear elements extending along the rotational axis. Further, the high shear tool has an opening for facilitating an axial flow, wherein (i) the opening comprises a central channel defined within the one or more shear elements and/or (ii) the opening is defined between the shear elements and the rotational axis. The high shear tool is further configured to block less than 50% of a cross-section of the container. In specific embodiments, the high shear tool is configured for providing a shear force (Fₛ) to the base material in the container (to provide the SME to the base material). The temperature control system is configured for controlling a shear stage temperature (Tₛ) of the base material in the container. The system is configured for treating the base material in the container (especially by providing the specific mechanical energy and configuring the shear stage temperature). Further, in embodiments, the forming temperature control system is configured for controlling a forming temperature (T_{f}) of the treated base material in the forming system. The forming temperature control system may further be configured for controlling a forming temperature profile ("FTP") of treated base material over the forming system. Further, the system is (configured) for producing the product comprising a fibrous structure from a protein-comprising base material. Further, especially, the system is configured for controlling the transport system, the high shear device, and the forming system, especially (substantially) independent, from each other. In further specific embodiments, the system further comprises a control system, especially configured for controlling the transport system, the high shear device, and the forming system (independent from each other). In further specific embodiment, the system is configured for handling (and treating) the base material at an elevated pressure, higher than 1 bara, such as at least 5 bara, especially at least 10 bara. In embodiments, the system is configured for handling the base material at e.g. 30 bara. It is noted that especially an upstream side of the system may be configured to resist the high elevated pressures. Because the pressure may essentially reduce towards a downstream side of the system, in embodiments, the upstream side of the system may be configured for higher pressures than the downstream side of the system.

The process and the system of the invention may provide an alternative to extrusion processes and an alternative to an extrusion system (or extruder system). Moreover, the process and system may especially be controlled to a greater extend then comparable extrusion processes/systems. Using the process products, especially food products, may be made having characteristics that differ from prior art products. In the process, different physical (and optionally chemical) phenomena, like transportation, shearing, heating, (reacting), forming, and structuring of the material being processed, may be controlled substantially independent from each other. The process may be easily scaled up. Additionally, the system/process may allow easy changing to different base materials and resetting (or determining of) the operating conditions that may be required. Moreover, by separating the different phenomenon, the energy consumption for producing the product may be reduced compared to extrusion. Using a single configuration of the system, a wide variety of products and product properties, such as fiber properties (length, thickness, strength), texture and mechanical properties may be provided by merely adapting the recipes and/or setting/controlling the desired operating parameters. The product properties, especially the fiber properties may correspond to those of e.g. meat, chicken or fish, by controlling the operation.

Hence, the invention provides a continuous process for production of a product comprising a fibrous structure from a base material, wherein the base material is a protein-comprising material, wherein the process comprises a transport stage, a high shear stage, and a forming stage, as further defined in the accompanying claims.

Further, the invention provides a system for production of a product comprising a fibrous structure, from a protein-comprising base material, wherein the system comprises (i) a transport system, (ii) a high shear device comprising a container and temperature control system, wherein the container comprises a high shear tool (or "shear tool") configured rotatably around a rotational axis and configured parallel to a longitudinal axis of the container, and (iii) a forming system comprising a forming temperature control system, as further defined in the accompanying claims.

The base material may comprise a polymer (or a mixture comprising a plurality of polymers). The base material may comprise a biopolymer. Moreover, the base material may be a polymer-comprising material. The polymer may especially be a biopolymer. The term "polymer" may in embodiments refer to a plurality of different polymers. The base material may in embodiments comprise a mixture, such as a mixture of ingredients. In specific embodiments, the base material comprises a mixture comprising a liquid (and further ingredients). The base material may have a dough-like appearance. This may herein also be indicated as "a dough". The base material may comprise a dough.

Herein, the term "biopolymer" especially refers to a natural polymer, such as produced by cells of living organisms. The term may in embodiments, e.g., refer to a polypeptide or protein. Additionally, or alternatively, the term may refer to a polysaccharide, such as a starch or a cellulose. The polysaccharide may essentially originate from any natural source, such as from grains, legumes, tubers, vegetables, etc. Further, the terms "polymer" and "biopolymer" may refer to a plurality of (different) polymers and biopolymers, respectively, such as a mixture of polymers or a mixture of biopolymers. The base material may in embodiments, e.g., also comprise a starch and a protein (and some further ingredients or additives). In embodiments at least 40 wt.%, such as at least 50 wt.%, especially at least 60 wt.% of the base material on a dry matter base comprises (consists of) protein.

Furthermore, the term protein may refer to any arbitrary protein. The protein may, e.g., be a plant based (vegetable) protein. The protein may be an animal protein or an insect protein. The protein may be a fungi-based protein, or mycoprotein. Additionally, or alternatively, the protein may be an algae protein. The protein may be a textured protein (e.g. texturized vegetable protein , TVP, such as texturized soy protein. The base material may in embodiments comprise (pre) texturized protein (especially next to further base material. In embodiments the protein is selected from the group consisting of a plant based (vegetable) protein, an animal protein, a texturized vegetable protein (TVP), a mycoprotein, an insect protein, and an algae protein. Further, the protein may in embodiments be provided as a protein isolate and/or a protein concentrate. In further embodiments, the base material may comprise a protein isolate. Additionally or alternatively, the base material comprises a protein concentrate. Moreover, the term protein may refer to more than one different (kind of) proteins, especially as described herein.

The base material is especially treated in the container. The container may therefore also be referred to a (treatment) vessel, or, e.g., a process tank. In embodiments, the container is an elongated container. In embodiments, the container comprises a polygonal cross-section (perpendicular to a (longitudinal) container axis). The container may e.g. comprise a square cross section, a hexagonal cross section, an octagonal cross-section, etc. The (cross-section of the) container may be non-circular. In further embodiments, the container may comprise an at least partly cylindrical vessel (having a circular cross-section). In further embodiments, a wall of the container ("container wall") encloses a container space (or container volume), especially a "treatment space" or "operating space". In further specific embodiments, the container wall defines at least part of a cylindrical (treatment) space. The container may thus further comprise a longitudinal axis. Further, in embodiments, the container comprises the high shear tool, especially for subjecting the base material to the shear force, especially for providing the specific mechanical energy to the base material. The high shear tool is in configured (i) rotatably around a (virtual) rotational axis (or "(virtual) rotatable shaft"). The rotational axis is configured parallel to the longitudinal axis of the container. The rotational axis may be an axis of a (rotatable) shaft (of the sharing element). Yet, the rotational axis may also be a virtual axis. The rotational axis may in embodiments coincide with the container axis. In further embodiments, the rotational axis and the container axis do not coincide. The high shear tool is especially arranged in the treatment space.

The terms "operating space", "container space", "volume of the container" and comparable terms especially refer to the inner volume of the container (especially defined by the container wall).

The shear tool comprises a shear element extending along the rotational axis. The term "shear element" may refer to a plurality of (different) shear elements. The shear tool may in embodiments comprise a plurality of shear elements (extending along the rotational axis). The shear tool has a (central) opening, such as a central channel defined within the shear element(s). The opening may further be defined between the shear elements, and especially the rotational axis. Such opening may in embodiments have an annulus-like shape, shaped around a physical rotational axis of the shear element. The opening may in further embodiments have a cylindrical shape. The shape, such as the annulus shape or the cylindrical shape, may locally vary. For instance, in embodiments the shear element may be connected to the rotational axis at specific longitudinal positions, whereas at other longitudinal positions the element is not directly connected to the rotational axis (at that longitudinal position). The opening or channel facilitates an (overall) axial flow of the base material, see also further below. In further embodiments, comprising a plurality of shear tools (see further below) an opening may also be formed between the shear tools. The term "opening" may refer to a plurality of openings.

Further, the shear element especially extends from the rotational axis. The shear element is basically configured for shearing and/or mixing, especially while maintaining the base material at substantially the same longitudinal position (if no external transport force is imposed on the base material). The shear element may be configured to minimize imposing a transport force (in the transport direction) on the base material. Minimizing a transport force, or at least providing a transport force in only one direction, may provide a unidirectional treatment of all of the base material. A unidirectional treatment of the base material, especially a treatment being rather constant over the total of the base material, may facilitate controlling a final structure of the product. The shear element may, e.g., be configured (almost) parallel to the longitudinal axis of the container. The shear element may be configured at a small angle relative to the axis of the container, such as in the range of -10° to 10°. Herein, also a shear element arranged parallel to the rotational axis may be referred to as a helix. For such parallel arranged element, the angle is substantially 0°. In specific embodiments, the shear element is configured parallel to the rotational axis of the shear tool.

The axis of the container is especially parallel to a (direction of) a lead (L) of the helical shear element. In further embodiments the (helical) shear element may be arranged at an angle with respect to the axis of the container, and especially also the lead may be arranged under that angle with respect to the axis of the container. The term "lead" (L) is known to the skilled person and indicates a total axial distance defined by a single revolution of the helix (helical shear element). Said angle may also be known of the helix angle. For a helical element, the helix angle equals the acrtan (arctangent or inverse tangent) of a circumference of a cylinder defined by the helical element (e.g., the shear element) over the lead of the helical element, i.e. arctan (2πr/L), with r being a radius of the cylinder. The helix angle is complementary (together making up 90°) to the lead angle of the helix, i.e. the angle between the helix and a plane of rotation of the helix.

In embodiments, e.g., the (helix) angle equals 10°, indicating that the ratio L/r is about 36 (35.633), indicating that if the diameter defined by the helix is 10 cm, a total axial length for 1 revolution of the helix is about 3.6 meter. For an angle of 20°, L over r is about 17 and for an angle of 0°, the shear element is configured parallel to the longitudinal axis (which may be regarded as a limit of a helix). In embodiments a ratio of the lead of the shear element to a radius of (defined by) the shear element is at least 15, such as at least 20, especially at least 30. ,the ratio may in embodiments be 100, or even larger, especially up to infinity. In embodiments the shear element is configured (substantially) parallel to the rotational axis (corresponding to above ratio being substantially infinity).

Further, the shear tool is especially configured for shearing the base material between a wall of the container and the (rotating) shear tool, especially between a wall of the container and the shear element of the rotating shear tool. The container wall surrounding the shear tool may especially be configured in accordance with the cross-section of the container as described above. The container wall may in embodiments at least partly be polygonal. In further embodiments, the container wall may at least partly be cylindrical. Hence, in embodiments, the shear tool, especially the shear element, may be configured for shearing the base material continuously during a (single) rotation of the shear tool. A (minimal) distance between the wall and (a specific location of) the shear tool may stay constant during rotation (e.g., if the container cross-section is circular and the rotational axis coincides with the container axis). In further embodiments, the minimal distance between the wall and the shear tool may vary during rotation of the shear tool (e.g., in a container with a non-circular cross-section and/or wherein the rotational axis does not coincide with the container axis). In the latter embodiments the base material may undergo relaxation at a location where the (minimal) distance between the container and shear tool is (during rotating) increases.

The high shear tool comprises a shear element extending along the rotational axis, wherein the shear element is configured at an angle of -10° to +10° relative to the longitudinal axis of the container (or to the rotational axis of the (helical) shear element.

Hence, in the high shear stage, the high shear is provided by rotating a high shear tool in the container around a (virtual) rotational axis, especially wherein the rotational axis is configured parallel to the transport direction, and especially wherein the base material is sheared between a wall of the container and the (rotating) high shear tool. Further, especially, in the high shear stage, a direction of the shear force (Fₛ) is selected substantially perpendicular to the transport direction of the base material.

In embodiments the discharge port may be arranged for discharge of the treated base material in a radial direction, especially in a direction substantially perpendicular to the transport direction. Such configuration may advantageously be combined with embodiments wherein the direction of the shear force is substantially perpendicular to the transport direction. This way a distortion of the flow (profile) of the base material at the discharge port may be minimized. In other embodiments, the configuration of the discharge port may be different. For instance a direction of the discharge port may (also) be aligned with the container axis.

In embodiments, a minimum distance between the container wall and the high shear tool (or the shear element) may in embodiments be at least 0.05 mm, such as at least 0.1 mm, especially at least 0.5 mm, such as at least 1 mm. The minimum distance may further especially be equal to or less than 30 mm, especially equal to or less than 25 mm, such as equal to or less than 20 mm, even more especially 15 mm at maximum. In embodiments, the minimum distance between the container and the high shear tool (or shear element) is in the range of 0.1-20 mm, especially in the range of 0.5-10 mm. It is noted that the distance between the container wall and the high shear tool may in embodiments be equal to the minimum distance at specific locations of the container wall. For instance, in embodiment, the rotational axis of the high shear tool and the axis of the container do not coincide. In such embodiments, the distance between the wall and the shear tool may change (considerably) in a radial direction. Moreover, also in a polygonal container, the distance between the wall and the shear tool may change.

Further, especially in the high shear stage, the base material may be subjected to the shear force during a predetermined shearing period. The shear force, and/or especially the SME, may be controlled by the configuration of the shear tool. The shear force and/or specific mechanical energy may further be controlled by a rotational speed of the shear tool. The shearing period may be controlled by controlling a flow (rate) of the base material through the container. The shearing period may in embodiments be controlled by controlling a transport velocity of the base material (especially in the transport stage). Further, especially the specific mechanical energy provided to the base material is a combination of flow rate and shear force and may in embodiments be controlled by controlling the shear force and/or the flow rate of the base material. The shear force may especially be a function of the configuration of the shear tool (in the container) and a rotational speed of the shear tool. Furter, especially, the shear force is a function of the SME. The specific mechanical energy provided to the base material, is in the range of 25 Whr - 400 Whr/kg (base material), especially 100-400 Whr per kg of base material. The SME provided to the base material is at least 25 Whr/kg (base material), such as in further embodiments at least 40 Whr/kg, especially at least 50 Whr/kg, or at least 100 Whr/kg. Said SME may in further embodiments be 200 Whr/kg at maximum. The SME may especially be in the range of 50 Whr/kg base material, e.g. 50 ± 50% Whr/kg. Hence, the SME provided to the base material is in the range of 25-400 Whr/kg base material.

The term "flow" such as in the phrase "controlling a flow" especially refers to a flow rate, e.g. in mass per time unit or volume per time unit(, mass flow (rate) and volume flow (rate), respectively.

The high shear tool may in embodiments comprise or define a screw like or helical configuration. The high shear tool may further comprise a plurality of shear elements, e.g. two shear elements, or three shear elements, or even 4, 5, 6, 8 or even more shear elements. It is noted that lead of the shear element may also be referred to as a pitch of the element for shear tools with a single shear element. The pitch may be half or a quarter, etc. of the lead for a tool having two or four, etc. (identical) shear elements, respectively The shear elements may in embodiments be configured as a flight extending from the rotational axis. Such flight may especially be open near the rotational axis over a (substantial) length of the rotational axis and closed remote from the rotational axis In specific embodiments, the shear tool may e.g. a plurality of shear elements, together defining a helical configuration. In further embodiments, the shear tool may have a straight configuration, e.g. comprising one or more shear elements being configured parallel to the rotational axis of the high shear tool. The helical configuration may in embodiments be defined by the shear tool, especially shear element being configured at an angle relative to the rotational axis of the shear tool (or the axis of the container when having a single shear tool and wherein the rotational axis is arranged parallel to the container axis).The high shear tool may in embodiments comprise an open configuration. The term "open configuration" especially relates to a configuration of the shear tool defining a relative high flow-through area in the transport direction. For instance, in embodiments the base material may flow (in the transport direct) through at least 50%, such as at least 75%, or even at least 90% of a cross-section (perpendicular to the transport direction) of the operating space (the container space), whereas the remainder of the cross-section is occupied by the shear tool. In embodiments, the high shear tool(s) may block less than 50%, such as less than 40%, especially less than 35%, even more especially less than 25% of a cross-section of the container. Moreover, in embodiments a ratio of a total volume of (a total of) the shear tool(s) relative to a total volume of the operating space (in the container) (at locations comprising the shear tool) may be in the range of 1:20 - 1:2, such as 1:10 - 1:2, especially 1:10 - 1:5.

In embodiments, a ratio of a total volume of (a total of) the shear tool(s) relative to a total volume of the container may be in the range of 1:20 - 1:2, such as 1:10 - 1:2, especially 1:10 - 1:5. In further embodiments, less than 50%, especially less than 40%, such as less than 35% of the total volume of the container is occupied (filled) by the shear tools(s). In further embodiments, a total volume of the shear tool(s) to a total volume of the container is in the range of 0.05 - 0.5, especially 0.05-0.3. In further embodiments, a ratio of the total volume of the shear tool to the total volume of the container is in the range of 0.2-0.5, especially 0.2-0.4. The high shear tool may in embodiments block less than 50%, especially less than 25 %, such as less than 10% of a cross section of the container. The blockage may change along the rotational axis. The given percentages may especially relate to a mean blockage, i.e. a blockage of the cross section of the container averaged over the length of the shear tool.

The term "flow-through" in expressions like "flow-through opening" especially refers to a structure or device such as a channel wherein a fluid or flowable mixture may enter the structure or device at a first location (or end) and exit the structure or device at a further location (or end), different from the first location.

The term "high shear tool" may refer to a plurality of (different or the same) high shear tools, such as two high shear tools, at least three high shear tools, such as 4, 5, 6, or even more heigh shear tools.

In further embodiments, two (or more) (helical) high shear tools may be arranged parallel to each other. The plurality of, especially helical, shear tools may be configured intermeshing, partly intermeshing or non-intermeshing in embodiments (relative to one or more of the other shear tool(s)). Further, multiple rotatable shear tools may be configured to co-rotate or counter-rotate. In embodiments, the polygonal container wall may be configured to correspond to the plurality of high shear tools, e.g. having two distinct parts for two shear tools. In further embodiments, the container wall may define more than one at least partly cylindrical space. For instance, in a first (at least partly cylindrical) space, a first shear tool may be configured rotatably, and in a second (at least partly cylindrical) space, a second shear tool may be configured rotatably. Hence, in embodiments, the container comprises a plurality of high shear tools arranged parallel to each other. In alternative embodiments one or more of the high shear tools may be configured at an angle relative to the container axis. In embodiments a shape of the high shear tool may be tapered (in the longitudinal direction). In embodiment comprising tapered high shear tools, the high shear tools may be configured at an angle from each other.

The system may further be configured for controlling the shear stage temperature (Tₛ) in the container. The temperature control system may in embodiments comprise one or more temperature control elements. In embodiments, e.g. the container wall may comprise a temperature control element (or a plurality of temperature control elements) configured for controlling the temperature in the container (wall). The container, especially the container wall, may e.g. comprise heating elements and/or cooling elements. Additionally or alternatively, the container wall may comprise one or more fluid channels through which a temperature control medium (coolant or heating medium) may flow. The container may in further embodiments comprise a jacketed wall (for cooling and/or heating the container). In further embodiments, the shear tool, especially the shear element (also) comprises a temperature control element. The shear tool, especially the shear element(s) may be hollow. The shear tool may e.g. comprise a fluid channel configured to host a (flowing) temperature control fluid (to provide or absorb heat to/from the base material). The fluid channel may in embodiments be configured in a shaft of the shear tool. Additionally or alternatively the fluid channel may be configured in the shear element(s). The shear element may especially comprise the fluid channel in a location furthest extending from the rotational axis (i.e. coming closest to the container wall during rotating). Hence, especially a temperature of the base material (the shearing stage temperature) may be controlled by the one or more temperature control elements.

Depending on the base material and/or other circumstances, the temperature control fluid may have a low temperature for cooling the base material being treated or the fluid may have a high temperature for heating the base material being treated. By changing the temperature with the temperature control system, especially the temperature control element, the shear stage temperature may be controlled, for instance to a temperature in the range of 65-150 °C, especially in the range of 70-150 °C, or 80-150 °C, such as 90-140 °C, 100-140 °C, or e.g. 80-90 °C. For specific embodiments, the shear stage temperature may be set to about 100-120 °C. The desired temperature may especially depend on the base material being treated. For proteins it may be advantageous to at least partly denature the protein during treatment. At least partly denaturing the protein may facilitate providing desired characteristics to the product that is formed in the forming stage.

Hence, in embodiments, the method comprises controlling the shear stage temperature (Tₛ) in a range as given above in relation to the temperature control system. In further specific embodiments, the shear stage temperature (Tₛ) is selected to (at least partly) denature at least part of the protein. Further, the term "shear stage temperature" may in embodiments refer to a (shear stage) temperature profile ("STP") over the container.

Hence, it is an aspect of the invention to treat the base material in the container while transporting (including temporarily holding/maintaining the base material at a predetermined - axial - location in the container) the base material through the container. Transporting may be (substantially completely) provided by a transport system configured in fluid connection with the container. The transport system may in embodiments not being comprised by the container. The shear tool in the container may especially not function like screws such as in an extruder, used for transporting combined with shearing (and mixing). Transporting, or a flow of the base material, through the container may be the result of the pressure difference between the feeding pressure and the discharge pressure, especially provided at the inlet port and the discharge port of the container, respectively. In embodiments at least 75% of the flow of the base material through the container is the result of said pressure difference. In further embodiments, at least 80%, such as at least 90% of the flow of the base material through the container is the result of said pressure difference. For instance, in embodiments (a further) less than 25%, especially less than 20%, such as less than 10% of the flow may be the result of transport induced by the high shearing tool.

The feeding pressure may in embodiments be provided by a feeding device, such as a feeding pump, feeding the base material into the container. The feeding pressure may especially be higher than 1 bara (bar absolute), such as at least 5 bara. The feeding pressure may in embodiments be equal to or lower than 100 bara, such as 50 bara, especially 30 bara, even more especially 25 bara, such as 10 bara at maximum. In embodiments, the feeding pressure may be in the range of 1.1-100 bara, especially 1.1-90 bara, such as 5-90 bara, especially 10-90 bara. In further embodiments, the feeding pressure may be in the range of 2-50 bara, especially 2-25 bara, such as 2-10 bara. Further, the discharge pressure may in embodiments be at least 1 bara, especially at least 1.5 bara, such as at least 2 bara. In embodiments, the discharge pressure may be at least 5 bara. Based on the difference between the feeding pressure and the discharge pressure, the base material may flow through the container. Additionally, or alternative, the transport system may (further or also) comprise a transport device configured fluidly connected to the discharge port. The (further) transport device may in embodiments be configured with a suction side coupled to the discharge port. Hence in embodiments, the discharge pressure may (also) be below 1 bara, such between 0.5 and 1 bara. The (further) transport device may in embodiments be configured to provide a vacuum at the discharge port. Based on the configuration of the system, the pressure in the container may in embodiments, especially (substantially) (only) reduce in a downstream direction.

In specific embodiments, the transport system is configured to provide the treated base material at an elevated pressure at the discharge port. Hence, in embodiments, the transport stage comprises transporting the base material into the container using a transport device arranged upstream of the container. The base material may especially be transported into the container at a feeding pressure selected larger than 1 bara, especially larger than 2 bara, such as from the range of 10 - 90 bar. Applying an elevated pressure may induce the flow of the base material through the system. Further, such elevated pressure may affect the treatment in the container. An elevated pressure may in embodiments, e.g., prevent liquid in the mixture to vaporize during treatment. An elevated pressure may further facilitate the treatment. A pressure over 1 bara at the discharge port may further be required to further guide the treated base material through the forming system. Yet, in specific embodiments the (further) transport device (fluidly connected to (the exit of /the first end of) the forming system may be configured to transport (pump) the treated material through the forming system. In embodiments a (further) transport device is configured between the discharge port of the container and the (first end) of the forming system.

In further embodiments the pressure difference between the feeding pressure (P_{f}) and the discharge pressure (P_{d}) is selected to provide at least 70%, especially at least 85%, especially at least 95%, such as substantially all, of a total energy required for transporting the base material through the container At maximum 15 %, especially at maximum 5% of the total energy required for transporting the base material through the container is provided by the high shear tool.

In further specific embodiment, the system, especially the transport system, may further comprise a further transport device. The further transport device may especially be arranged downstream of the discharge port and especially upstream of the forming system. Such further transport device may facilitate transporting the treated base material trough the forming system. In further specific embodiments, the process comprises providing equal to or less than 30% of the total energy required for transporting the base material through the container and through the forming system with a further transporting device, especially configured at a location upstream of the forming system, especially between the discharge port and the forming system.

The term "transport device" may refer to a plurality of different transport devices. Further, use of the term "further" in "(further) transport device" does not necessarily mean that the system comprises at least one transport device and a further transport device. Herein this term is also used to explain embodiments wherein "the transport device" may be configured upstream of the container, and the "(further) transport device" may be arranged downstream of the container. In embodiments a first transport device is configured upstream of the container and a further transport device is configured downstream of the container.

The terms "upstream" and "downstream" relate to an arrangement of items or features relative to the propagation of an element such as a particle, a fluid, or the base material in a channel, flow path or hydraulic circuit, wherein relative to a first position within the channel, flow path or circuit, a second position in the channel, flow path or hydraulic circuit to an inlet (for the fluid, particle, or base material) of the channel, flow path or hydraulic circuit is "upstream", and a third position within the channel, flow path or circuit further away from the inlet "downstream".

Hence, in embodiments, different pressures may be provided by the transport system, especially from under 1 bara to far above 1 bara. Yet, especially the system, especially transport system, is configured for providing (generating) a pressure difference between the feeding pressure and the discharge pressure. The transport system is in embodiments configured for providing the pressure difference over the container, especially based on pressures imposed on the container from external of the container.

Furthermore, especially because of the imposed pressures, the system, especially the container is in embodiments configured for being operated at these pressures. In embodiments, e.g. the system, especially the container is configured for a (working ) pressure in the range of 0.4-100 bara, such as 0.5-100 bara, even more especially at least 1.5 bara, such as at least 5 bara. The system, especially the container, may be configured for a (operating) pressure in the range of 0.4-10 bara, such as 0.4-5 bara in embodiments. In further specific embodiments, the system, especially the container, is configured for a (operating) pressure in the range of 1.1 - 100 bara, such as 1.1-90 bara, such as at least 2 bara, especially at least 5 bara, even more especially at least 10 bara, and further especially equal to or less than 90 bara, such as equal to or less than 75 bara, especially equal to or less than 50 bara.

The container may be made of a container material. The container material may e.g. comprise a metal, especially steel, such as stainless steel. The container material may further be selected for being a food grade material. Further, the container wall may be configured for operating at the operating pressure as described herein, especially between the feeding pressure and the discharge pressure. A thickness of the wall ("wall thickness") may in embodiments be at least 3 mm, such as at least 5 mm, especially at least 7 mm. The wall thickness may basically have any maximum. For economic reasons the wall thickness may especially be 30 mm at maximum, such as 20 mm at maximum. The system may further comprise seals between different elements or "parts" of the system (e.g. the container and the shear tool) that may resist high pressure, especially at the upstream location of the container. The seal may e.g. comprise ceramic seals. The system may in embodiments comprise a seal between the rotational axis (or rotatable shaft) of the shear tool and the container. The term "seal" may refer to a plurality of (different) seals.

As indicated above, downstream of the container, the treated base material may be guided into (the first end of) the forming system. In embodiments, the treated material is formed in the forming system to provide the product exiting the forming system, especially at (the open) the second end of the forming system (or "exit" of the forming system). To prevent extreme expansion of the product, such as based on (rapid/instantaneous) evaporation of liquid in the product, the method may comprise controlling the (forming) temperature of the treated base material (in the forming system), especially to a value below a boiling point of the liquid (at the exit of the forming system). In embodiments, the base material e.g. may comprise water and the temperature may be controlled to be equal to or less than, especially less than, 100 °C. Moreover, by controlling the forming temperature in the forming system, a flow of the treated material may be controlled. In embodiments, the flow (and temperature) is especially controlled to provide the product comprising a fibrous structure. The forming system may in further embodiments be configured for providing a laminar flow (of the treated base material in the forming system). Especially, such laminar flowing treated material may be set in the forming system to provide the fibrous system. In embodiments, the flowing treated material may be cooled in the forming system. Cooling of the flow may gradually decrease a temperature of the flowing treated material from an outside of the flow to a center of the flow, resulting in the fibrous structure. Additionally or alternatively, the flowing treated base material may be heated. Cooling and/or heating may provide growth or reduction of crystalline sectors in the treated material and may further allow to control a structure of the product exiting the forming system.

Hence, in embodiments, the product exits the forming system at (slightly above) atmospheric pressure wherein the forming temperature (T_{f}) of the treated base material in the forming system is controlled for providing the fibrous structure. The forming temperature is especially controlled to provide the product, especially the fibrous structure. In embodiments, the forming temperature is controlled to prevent expansion, especially puffing, of the product exiting the forming system. The forming temperature may especially be controlled to provide the product at a temperature around 100 °C, such as below 100 °C, especially under 100 °C. The forming temperature at a downstream end of the forming system may in embodiments be around 100 °C, such as (just) under 100 °C. Yet, in further specific embodiments, the forming temperature at the downstream end of the forming system may be higher. Furthermore, the forming temperature in the forming system further upstream (of the downstream end) may be higher and/or lower than said temperature at the downstream end (especially, to control a structure or texture of the product), as described above. The forming temperature at a location further upstream (such as at an upstream end of the forming system or a determined location between the upstream end and the downstream end) may e.g. be at least 120 °C, such as at least 150 °C, or even higher. The forming temperature further upstream of the downstream end may e.g. be in the range of 70-200 C, such as 70 -160 °C, e.g. in the range of 100-150 °C, and/or in the range of 70-100 °C. In further embodiments, the process and/or the system is configured for providing a flow of the treated base material in the forming system as a substantially laminar flow.

Herein, the term "forming temperature" may refer to a plurality of different forming temperatures. The term may e.g. refer a (forming) temperature profile (or "FTP") over the forming system, a forming temperature at a specific forming element as well as temperature profiled over different forming elements. Likewise, the term "shear stage temperature" may refer to a temperature profile (of the base material) over the container. The temperature profile may e.g. be based on a temperature at a (location of) a shear tool and/or e.g. a temperature at location of the wall of the container.

The forming system essentially comprises a hollow (tubular) forming element (to surround the flowing treated material). Basically, the forming element may comprise any arbitrary shape or cross-section. The cross-section of the forming element may e.g. resemble a shape of a (cross-section of) a meat product, especially to provide a product resembling the meat product. In further embodiments, the shape may resemble a fish product. The cross-section may be rectangular (including square). The cross-section of the forming element may be circular. Moreover, in embodiments, the cross-section may change along a length of the forming element. In embodiments, a flow-through area of the forming system is smaller than the flow-through area of the container.

Herein, the term "forming element" may in embodiments refer to a plurality of forming elements. The forming system may e.g. comprise a plurality of (different) forming elements arranged parallel to each other. The plurality of forming elements may be fluidly connected at extremes (at a first extreme and a second extreme) of the forming elements. As such, the treated base material from the container may be divided over the plurality of forming elements (at the first extremes of the elements) and successively be recombined (at the other extremes of the forming elements) (to provide the product). Further, dimension such as length or cross-sectional areas of the different forming elements may differ from each other. Hence, in embodiments also an extreme of a first forming element may not be connected to an extreme of a further forming element, but may fluidly be connected to a further location of the further forming element. Different dimensions may provide different flow profiles in the forming elements. Such configurations may further control the structure of the product.

Hence, in embodiments, the forming system comprises one or more hollow (especially tubular) forming elements. The forming system may comprise a plurality of forming elements arranged parallel to each other, wherein the forming elements are fluidly connected to each other at extremes of the forming elements. In further embodiments, the forming stage comprises: dividing the treated base material from the discharge port over the plurality of (tubular) forming elements and recombining the treated base material exiting the plurality of (tubular) forming elements, to provide the product, especially comprising the fibrous structure, at the exit of the forming system.

As discussed above, the base material may comprise a mixture of ingredients. In embodiments, all ingredients may be fed to the container at once. The ingredients may be fed as (a mixture of) dry ingredients and optionally wet ingredients. The base material may also comprise a mixture comprising a liquid, especially having a dough-like appearance. In embodiments also further ingredients or additives may be added to the base material at one or more further locations in the system. Such additives may e.g. comprise one or more of additives selected from the group (of food additives) consisting of coloring agents, fats, oils, vitamins, binding agents, flavorings. The additive may basically comprise any arbitrary appearance, such as single ingredient, a mixture, a liquid, a solid, a gas, and an emulsion, or combinations thereof.

Hence, in embodiments, the system is configured for adding additives to the (treated) base material (in the system) The system may e.g. comprise a dosing system (to dose the additive). The dosing system may be fluidly connected to one or more of (the (treatment) space in) the container and (a space in) the forming system, for providing an additive to the base material (and/or treated base material) in the container and/or the forming system (respectively). The dosing system may e.g. be fluidly connected to the forming system and may especially be configured for providing a layer (or coating) of the additive at a location between the treated base material and a wall of the forming system, especially of the forming element. The layer may in embodiments comprise a fat substitute, especially mimicking a fat layer of meat.

Further, in embodiments, the process may comprise adding an additive to the base material during one or more of the high shear stage and the forming stage. In yet further specific embodiments, the process may further comprise a (dough) preparation stage comprising mixing base material starter material and a liquid to provide the base material for the transport stage. Hence the system may in embodiments further comprise a (dough) preparation system fluidly connected to the transport system, for providing the base material (especially the dough) to the inlet port of the container.

The process and the system may be automated. To automate, the system and the process may comprise the control system, e.g. comprising a plurality of control units, functionally coupled to the system. The system may further comprise one or more sensors and controllable element (such as the temperature control system/element described above, an actuator of a feeding device, and actuator of the shear tool, etc.) to control the process. Examples of sensors are known to the skilled person and may e.g. comprise a (mass) flow meter (including Coriolis type mass flow meters), a dielectric sensor, and infrared sensor, a pressure sensor, a scale, etc. The sensors and controllable elements are especially (also) functionally coupled to the control system. The sensors may in embodiment be functionally connected to or comprised by a measuring system The system may be controlled based on a signal of the measuring system. The measuring system is especially functionally coupled to the control system. Additionally, or alternatively, the control system comprises at least part of the measuring system.

Hence, in embodiments, the system further comprises a measuring system for measuring one or more of a (volume and/or mass) flow of the base material in the container, the shearing temperature (Tₛ), the forming temperature (T_{f}), a velocity of the treated base material in the forming system, a total mechanical energy (or specific mechanical energy) provided to the base material (and/or provided to (and by) the shear tool), a density of the base material, a moisture content of the base material, a pressure (especially one or more pressures) in the container and a pressure (especially one or more pressures) in the forming system. The measuring system is especially configured for measuring one or more operating parameters (such as P_{f}, P_{d}, Tₛ, T_{f}, SME) of the method described herein. The (measuring) system may comprise one or more temperature sensors. The (measuring system may comprise one or more pressure sensors. Further, the (measuring) system may comprise one or more (mass and/or volume) flow sensors. The system may especially comprise a sensor or detector to measure a power of a motor driving the shear tool. The measuring system may be configured for measuring and/or determining the specific mechanical energy and/or the shear force (provided to the base material).

Further described herein is a product comprising a fibrous structure, especially obtainable with the process according to the invention. The fibrous structure may at least partly define a set (fixated) laminar or Hagen-Poiseuille (like) flow pattern. The structure may in embodiments comprise fibers that may define (at least part of ) a parabolic structure. Such structure may especially be found using a circular forming system. Yet, also using another kind of (cross-sectional) shape of the formation system may provide a comparable fibrous structure. In specific embodiments, the product comprises fibers having a length of at least 10 cm. In further embodiments the product comprises fibers having a length of at least 1 cm, such as at least 3 cm. The fibers may in embodiments have a length in the range of 3 cm - 10 cm. The fibers may in further embodiments be equal to or smaller than 25 cm, such as equal to or less than 15 cm. The product may comprise an anisotropic structure. The product may further comprise a coating, such as a fat (substitute) coating) arranged at a surface of the product. The product may comprise one or more (discrete) sections comprising (consisting of) an additive as described herein (e.g. a fat (substitute) and/or an emulsion). The product may in specific embodiments comprise a food product. The food product may especially comprise vegetable proteins. In embodiments, the food product is a vegetarian food product.

In this application, the feature 'cross-sectional area' is used. In that respect, the cross-sectional area can also be indicated as the flow-through cross-sectional area or cross-section. This cross-sectional area can be rectangular, elliptic, or round (such as a ring), for instance.

The term "on a dry matter basis" (or "on a dry matter weight") is known by the skilled person. The term "dry matter basis" such as in "based on dry matter (weight)" and "relative to a dry matter weight" relates to a total weight (mass) of a product (comprising a determined weight of water) minus the weight of the water in the product (the determined weight of water). The dry matter weight of a product is especially equal to a total weight of the product after removing substantially all of the water from the product, such as by heating (over 100 °C) of the product (especially over an extended period of time). Especially, if an amount of a component in a product (or a defined combination of components) is based on the dry matter (weight), the dry matter weight of the component is defined relative to the dry matter weight of the whole product (or the defined combination of components).

Herein the terms "oil" and "fat" may also be used interchangeably. Hence, in embodiments the term "oil or fat" may be replaced by the term "fat". The terms "fat" and "oil" may relate to a plurality of (different) fats and/or oils. The term may further relate to a mixture of different fats and/or oils. Further, the term "oil" may relate to a product that is liquid at room temperature whereas "fat" may relate to (such) a product that is solid or may not flow at room temperature.

### BRIEF DESCRIPTION OF THE DRAWINGS

Embodiments of the invention will now be described, by way of example only, with reference to the accompanying schematic drawings in which corresponding reference symbols indicate corresponding parts, and in which: Figs.1-3 schematically depict aspects of the process and the system of the invention; Fig. 4 schematically depicts an embodiment of the shear tool; and Fig. 5 schematically depicts an embodiment of the forming system. Figs 6 are pictures of fibrous structures prepared with the system. The schematic drawings are not necessarily to scale.

### DETAILED DESCRIPTION OF THE EMBODIMENTS

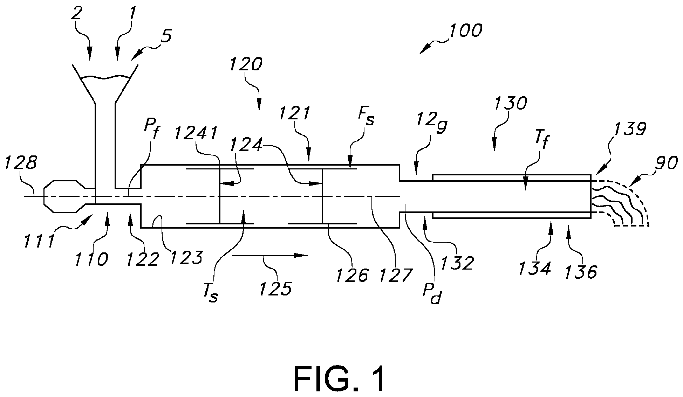

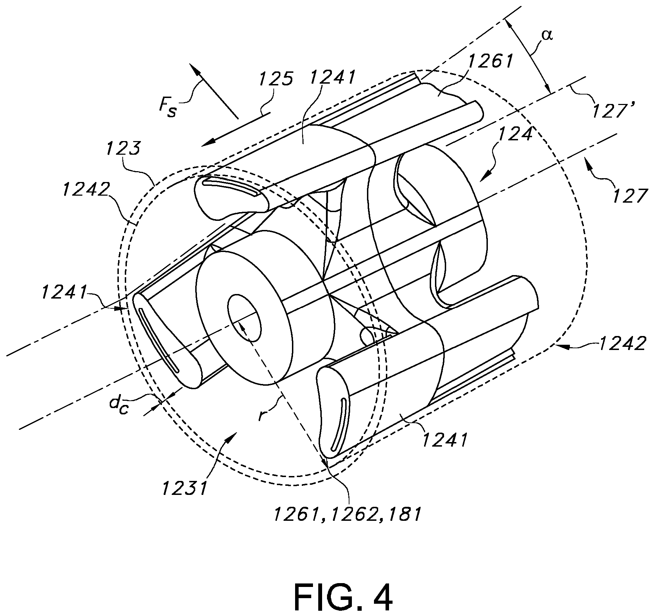

Fig. 1 schematically depicts an embodiment of the system 100 of the invention. The figure further schematically depicts an embodiment of the method of the invention. The system 100 is especially configured for forming of a product 90 from a base material 1. The base material 1 isa protein-comprising base material 5. Further, the product 90 comprises a fibrous structure as is schematically indicated in the figure by the lines in the product 90. The depicted system 100 comprises a transport system 110, a high shear device 120 and a forming system 130. The forming system 130 comprises a forming temperature control system 136. In this embodiment schematically depicted by jacketed or double wall 134. The high shear device 120 comprises a container 121 and temperature control system 126; in the depicted embodiment comprised by the high shear tool 124 (see also Fig. 4). Further the inlet port 122 and the discharge port 129 of the container 121 are indicated.

As is depicted in the figure, the first end 132 of the forming device 130 is fluidly connected to the discharge port 129 of the container 121, and the second end 139 (or exit 139) of the forming device 130 is open. The transport system 110 is configured for providing the base material 1 at a feed pressure P_{f} via the inlet port 122 into the container 121, transporting the base material 1 through the container 121 in the transport direction 125 and discharging treated base material 1 from the container 121 via the discharge port 129.

During transporting, the base material 1 is treated in the container 121. In the container 121 the high shear tool 124 is configured for providing a specific amount of energy (the SME), especially via the shear force Fₛ, to the base material 1, by rotating the high shear tool 124 in the container 121. Further, the temperature control system 126 is configured for controlling a shear stage temperature Tₛ of the base material 1 in the container 121. The shear stage temperature Tₛ may e.g. be controlled by controlling a temperature (profile) of (the wall 123 of) the container 121 and/or a temperature of the (hollow) shear element 1241. Downstream of the container121, the forming system 130 is arranged. The forming temperature control system 136 may control the forming temperature T_{f}, especially at multiple locations, of the treated base material 1 in the forming system 130. The forming temperature control system 136 may control the forming temperature profile FTP in embodiments.

The high shear tool 124 is configured rotatably around the rotational axis 127. In embodiments, the rotational axis 127 may be a virtual axis. In other embodiments, the rotational axis 127 may e.g. be defined by an elongated axis of a shaft of the high shear tool 124. The rotational axis 127 is configured parallel to the longitudinal axis 128 of the container 121. In the depicted embodiment, the rotational axis 127 and the axis 128 of the container 121 coincide. Yet in further embodiments these axes 127, 128 may show an eccentric configuration. Additionally, or alternatively the rotational axis 127 may be arranged at an angle relative to the container axis 128. Moreover, further embodiments may also comprise a plurality of high shear tools 124 each rotating at a different rotational axis 127. By rotating the shear tool 124, the base material 1 is sheared between the wall 123 of the container 121 and the high shear tool 124. The high shear tool 124 of the embodiment in Fig. 1 and Fig. 4 comprises shear elements 1241 extending along the rotational axis 127. The shear tool 124 may especially be configured for providing the shearing force substantially perpendicular to the transport direction 125. For that, e.g. the shear element 1241 may be configured parallel to or at a very small angle relative to the longitudinal container axis 128 and/or rotational axis 217.

In Fig. 4 a part of the high shear tool 124 is depicted, showing a location of the tool 124 where the shear elements 1241 are directly connected to the rotational axis 127. As is indicated, at further locations (extending in a longitudinal direction (to the front and back) there may be an opening between the elements 1241 and the rotational axis 127 (see also fig. 1) Therefore, the flow-through area may vary over along a length of the tool 124. The blockage of the cross sectional area of the container 121 may vary along the length of the container 121. Also further connections between the elements 1241 and the rotational axis 127 may also be configured. In the figure, further the cylinder 1242 being defined by the helical shear elements 1241 is indicated. The radius of the cylinder 1241 is indicated with the reference r. The angle is indicated as α, the angle may be explained herein as the angle α between the rotational axis 127 and the shear element 1241. In the figure, this angle α is demonstrated as the angle between the shear element 1241 (depicted at the top in the figure).and a virtual line 127' arranged at the cylinder 1242 parallel to the rotational axis 127. This line 127' is especially also perpendicular to a plane of rotation of the shear elements 1241). A minimal distance d_{c} between the shear tool 124 and the container wall 123 may be in the range of a couple of micrometers to one or more centimeters. It is noted that in Fig. 4, for clarity reasons, the wall 123 of the container is only very schematically indicated by the dotes line as a cylindrical wall 123 arranged concentric around the shear tool 124. As is described herein, in further embodiments the configuration is eccentric, and/or the container 121 may comprise a plurality of shear tools 124 and the minimal distance d_{c} may only be present at specific locations of the cross section of the container 121.Moreover, the container 121 may have in embodiment have a non-cylindrical configuration. Hence the cross section or wall 123 of the container 121 not necessary is circular. Furthermore, d_{c} may vary in a longitudinal and/or radial direction of the shear element 1241

Further, the embodiment of Fig. 4 depicts a fluid channel 1262 in the shear element 1241. Such fluid channel 1262 is an embodiment of an element 1261 of the temperature control system 136. By flowing a (temperature) fluid through the channel 1262 the temperature of the base material 1 being treated may be controlled. As such the channel 1262 is a controllable element 181 (see further below). Additionally or alternatively, a temperature control element 1261 may e.g. be configured at another location of the shear tool 124 and or in the container wall 123.

Fig. 4 further depicts a high shear tool 124 with an open configuration. The shear tool 124 defines a relative high flow-through area in the transport direction 125, relative to a total flow-through area of the container 121. In the figure the cross-section of (the operating space in) the container 121 is indicated with reference 1231. In this embodiment, the base material 1 may flow through about 50%, of the cross-section 1231, whereas the remainder of the cross-section 1231 is occupied by the shear tool 124. Fig. 4 also depicts that (in the high shear stage) a direction of the shear force Fₛ is configured substantially perpendicular to the transport direction 125 of the base material 1.

Fig. 1 also depicts an embodiment of the process of the invention, especially for production of the product 90 comprising the fibrous structure from a protein-comprising (base) material 5.

The process comprises the transport stage, wherein the base material 1 is provided with a feeding pressure P_{f} into the container 121, transported through the container 121 and discharged after treating in the container 121 from the container 121 again. Further, transporting the base material 1 and discharging the treated base material 1 is especially based on the pressure difference P_{f} - P_{d}. In the high shear stage a shear stage temperature Tₛ of the base material 1 in the container 121 is controlled and the specific mechanical energy is provided to the base material 1 Fₛ to treat the base material 1 in the container 121. The high shear stage and the transport stage especially overlap in time. Further, in the forming stage the treated base material 1 is guided from the container 121 through a forming system 130 to provide the product 90 at the exit 139 of the forming system 130. Meanwhile, the forming temperature T_{f} and/or a forming temperature profile, of the treated base material 1 in (over) the forming system 130 is controlled.

In the process, especially, (one or more of) the feeding pressure P_{f}, the shear stage temperature Tₛ, the specific mechanical energy, and the forming temperature T_{f} may be controlled independent from each other. The shear stage temperature Tₛ may in be controlled in the range of 65-150 °C. Herein this may also be indicated as "the temperature may be set in the range of 65-150 °C". The shear stage temperature Tₛ may, e.g., be set to at least partly denature the protein 2. It is noted that the phrase "controlling (parameters) independent from each other" especially indicates that the parameters may be set at a desired value. This does not necessarily imply that setting one parameter may not affect the other parameter. If one parameter would affect the other parameter, the other parameter may be set again to reverse the effect. For instance, when increasing the feeding pressure P_{f} this may affect the specific mechanical energy. Yet, the specific mechanical energy may be controlled again, e.g. by controlling the rotational speed of the high shear tool 124.

As discussed above, in embodiments, the operating parameters may especially be controlled independently from each other. Schematically, the phrase "controlling of the parameters independent(ly) from each other" is depicted for some parameters with the next table, wherein P refers to the difference between the feeding pressure (P_{f}) and a discharge pressure (P_{d}); n indicates the rotational speed of the high shear tool, "Flow" refers to the flow (rate) of the base material through the container, and SME refers to the SME provided to the base material; ↑ and ↓ indicate an increase and a decrease respectively, = indicates not changed, and ≈ indicates substantially not affected, e.g. only within a 10 - 15% range.

| Controlled parameter | | | | effect on parameter | | | |
|---|---|---|---|---|---|---|---|
| P | ↑ | n | = | Flow | ↑ | SME | ↓ |
| P | ↓ | n | = | Flow | ↓ | SME | ↑ |
| n | ↓ | P | = | Flow | ≈ | SME | ↓ |
| n | ↑ | P | = | Flow | ≈ | SME | ↑ |

For instance, if the pressure at the inlet is increased and the other controlled parameters are not changed, the flow will increase and based on that increase the SME will become less. Hence to increase the flow with the same SME, both P and n should be increased. It is noted that not all controllable parameters are included in the table. For instance also a temperature may be controlled. An increase in temperature may depending on the further conditions result in a lower viscous mass in the container that may require a lower pressure difference to result in the same flow. Inducing a temperature change may under other conditions result in a denaturation of proteins that may result in a higher viscosity and a lower flow rate (if the feed pressure is not altered). It will be understood that many scenarios are possible. Yet by again changing another and predetermined parameter, the conditions may be set on request.

Furthermore, the base material 1 may especially be subjected to predetermined shearing conditions during a (predetermined) shearing period, to achieve a desired (fibrous) structure.

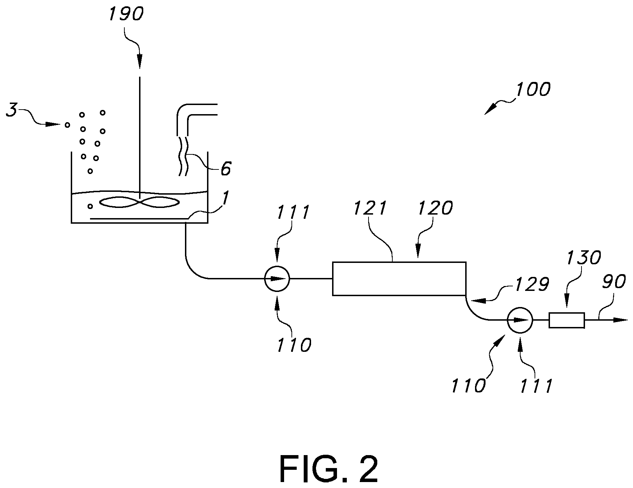

Fig. 2 further depicts an embodiment of the system 100 and of the process. This embodiment further comprises a (dough) preparation stage. The system 100 comprises a (dough) preparation system 190 fluidly connected to the transport system 110, for providing the base material 1 to the inlet port 122 of the container 121. In the preparation stage, base material starter material 3 and a liquid 6 is mixed to provide the base material 1 for the transport stage. The base material 1 may thus especially comprise a flowable/pumpable base material 1. Further, in the embodiment depicted in Fig. 2, the transport system 110 comprises two transport devices 111 or pumps 111. The first device 111 is configured upstream of the container 121, and the second transport device 111 is configured downstream of the container 121 and upstream of the forming system 130. In most embodiments, substantially all energy to transport the base material 1 through container 121 and through the forming system 130 is provided by one or more transport devices 111 upstream of the container 121. Yet in embodiments, a further transport device 111 may be arranged between the container 121 and the forming system 130 to support pumping of the treated base material 1 through the forming system 130. In specific embodiments, the pressure difference between the feeding pressure P_{f} and the discharge pressure P_{d} at least provides 70% of the total energy required for transporting the base material 1 through the container 121 and the forming system 130.

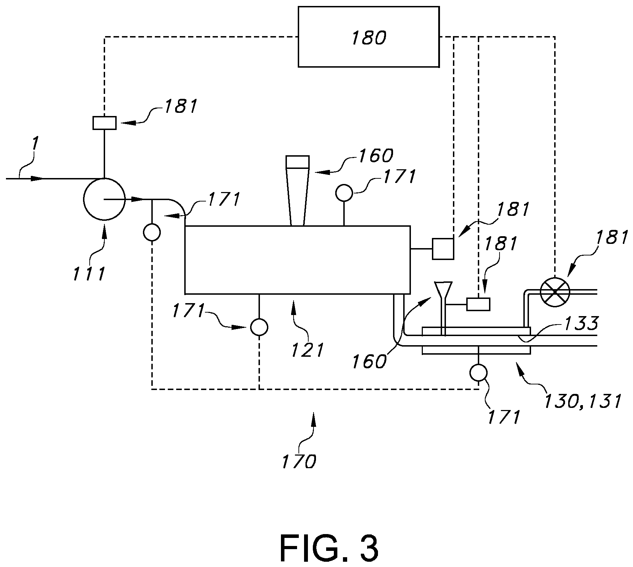

Fig. 3 depicts some further aspects of the system 100 and the process, especially related to controlling the process and the system 100. In the figure some examples of controllable elements 181 and measuring (system) elements 171 or sensors 171 are depicted. This system 100 comprises a measuring system 170 comprising the measuring elements 171 and/or functionally coupled to the measuring elements 171. The system further comprises a control system 180 comprising and/or functionally connected to the controllable elements 181 and the measuring system 170. Some of the controllable elements 181 and measuring elements/sensors 171 are depicted, such as an element 181 controlling the transport system 110, especially the transport device 111; an element 181 controlling the shear tool 124, e.g., an element 181 controlling a rotational speed of the high shear tool 124 (to control the shear force /specific mechanical energy provided to the base material 1. Further, a sensor 171 at the forming system 130 is depicted to sense a temperature in the forming system. Further, a valve 181 is depicted which may control a flow of a fluid through the double wall of the forming system 130.

The measuring system 170 may especially be configured for measuring one or more of a (mass and/or volume) flow of the base material 1 in the container, the shearing stage temperature Tₛ, the forming temperature T_{f}, a velocity of the base material 1 in the forming system 130, the specific mechanical energy provided (by the high shear tool 124) to the base material 1. The control system 180 is especially configured for controlling the transport system 110, the high shear device 120, and the forming system 130 substantially independent from each other.

Based on one or more of the controllable elements 181, the system may be controlled such that a flow of the treated base material 1 in the forming system 130 is substantially laminar. When setting (hardening) such laminar flow, the fibrous structure may be obtained. Yet, if the temperature of the product 90 is too high, the product may expand or puff when exiting the forming system. Therefore, if the product 90 exits the forming system 130 at atmospheric pressure, the forming temperature T_{f} of the treated base material 1 in the forming system 130 may especially be controlled for providing the fibrous structure at a temperature under 100 °C.

In Fig. 3 further two embodiments of a dosing system 160 are depicted. One of the dosing systems 160 is fluidly connected to the container 121 and the other one 160 is fluidly connected to the forming system 130. The dosing systems 160 may be used to provide an additive to the base material 1 in the container 121 and/or the forming system 130. In embodiments, using such dosing system 160 may enable to provide a layer of the additive (e.g. fat or a fat alternative) at a location between the treated base material 1 and the wall 133 of the forming system 130, especially of the forming element 131.

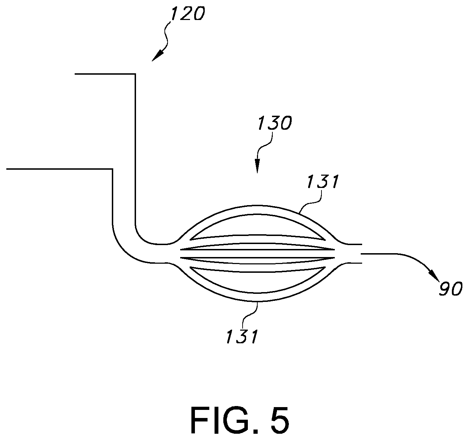

The forming system 130 may comprise a single forming element 131, such as a hollow pipe. However, in embodiments, the forming system 130 may comprise a plurality of elements 131. In Fig. 5, e.g., an embodiment of the forming system 130 is depicted comprises a plurality of forming elements 131 arranged parallel to each other and being fluidly connected to each other at extremes of the forming elements 131. It is noted that in other embodiments, the different forming elements 131 may also branch from each other, and not necessarily all are divided and reconnected as in the embodiment of Fig. 5. In such embodiment the treated base material 1 from the discharge port 129 may be divided over the plurality of forming elements 131. The treated base material 1 exiting the plurality of forming elements 131 may successively be recombined to provide the product 90 comprising the fibrous structure at the exit of the forming system 130.

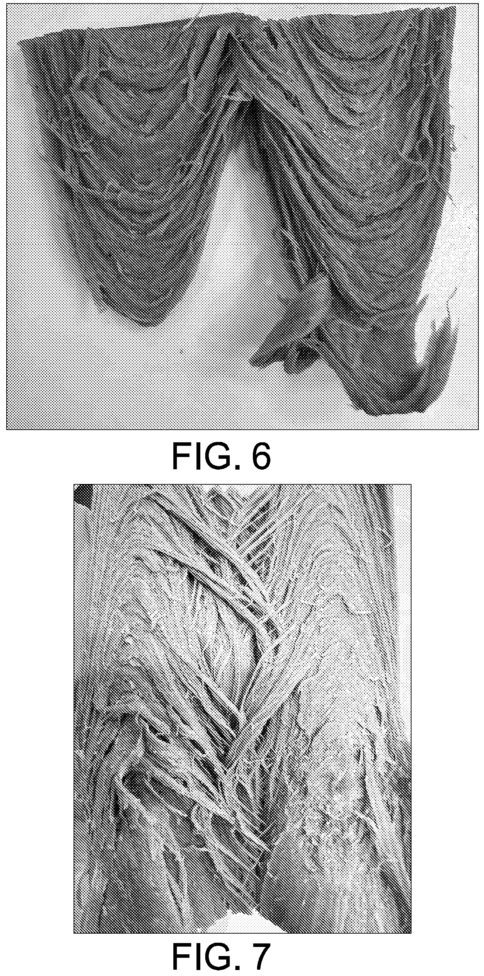

The pictures given in Figs, 6 and 7 depict some aspects of the fibrous structure. They do not represent a final product but show some characteristics of the structure with the fibers. In Fig. 6 the set product has been torn apart in the middle and unfolded in two halves. The picture clearly shows a fixated Hagen-Poiseuille (like) flow pattern. The picture demonstrates that the velocity of the treated base material 1 at the edge has been much lower than in the center of the forming system 130. Fig. 7 gives another example of the fibrous structure showing fibers that are rather loosely bound to each other. This may result in a texture more comparable to a meat texture than for instance may be produced using the extrusion technology, that normally results in rather compact products.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware.

A control system may control the system according to the invention, or may execute the herein described process according to the invention. Yet further, a computer program product, when running on a computer which is functionally coupled to or comprised by the system according to the invention, may control one or more controllable elements of said system.

## Claims

1. A continuous process for production of a product (90) comprising a fibrous structure from a base material (1), wherein the base material (1) is a protein-comprising material (5), the process comprising a transport stage, a high shear stage and a forming stage, wherein
- the transport stage comprises: (i) providing the base material (1) with a feeding pressure (P_{f}) into a container (121) (ii) transporting the base material (10) in a transport direction (125) through the container (121) and (iii) discharging treated base material (1) from the container (121), wherein transporting the base material (1) and discharging the treated base material (1) is based on a pressure difference between the feeding pressure (P_{f}) and a discharge pressure (P_{d}), wherein a flow of the base material (1) in the container (121) is controlled by controlling the pressure difference between the feeding pressure (P_{f}) and a discharge pressure (P_{d}),
- the high shear stage comprises: while transporting the base material (1) through the container (121) (i) controlling a shear stage temperature (Tₛ) of the base material (1) in the container (121) and (ii) providing a specific mechanical energy (SME) to the base material (1), to treat the base material (1) in the container (121), wherein the specific mechanical energy provided to the base material (1) is selected from the range of 25 Whr - 400 Whr per kg of base material (1), wherein the specific mechanical energy (SME) is controlled by controlling a shear force provided to the base material (1) as a function of the flow of the base material (1), wherein the shear force is provided to the base material (1) by rotating a high shear tool (124) comprised by the container (121) and arranged around a rotational axis (127) parallel to a longitudinal axis (128) of the container (121), wherein the base material (1) is sheared between a wall (123) of the container (121) and the high shear tool (124), wherein at maximum 15% of a total energy required for transporting the base material (1) through the container (121) is provided by the high shear tool (124), and wherein the shear stage temperature (Tₛ) is set to a value in the range of 65-150 °C, and
- the forming stage comprises: guiding the base material (1) from the container (121) through a forming system (130) while controlling a forming temperature (T_{f}) of the treated base material (1) in the forming system (130), to provide the product (90) at an exit (139) of the forming system (130).

2. The process according to claim 1, comprising setting one or more of the feeding pressure (F_{f}), the shear stage temperature (Tₛ), the specific mechanical energy (SME), and the forming temperature (T_{f}) independently from each other.

3. The process according to any one of the preceding claims, wherein at least 50 wt.% of the base material (1) on a dry matter base comprises protein (2), wherein the shear stage temperature (Tₛ) is selected to at least partly denature the protein (2).

4. The process according to claim 3, wherein the protein (2) is a plant-based protein.

5. The process according to any one of the preceding claims wherein in the high shear stage, a direction of a shear force (Fₛ) imposed on the base material (1) in the container is selected substantially perpendicular to the transport direction (125) of the base material (1).

6. The process according to any one of the preceding claims, wherein the product (90) exits the forming system (130) at atmospheric pressure, wherein the forming temperature (T_{f}) of the base material (1) in the forming system (130) is controlled for providing the fibrous structure at a temperature under 100 °C, wherein the process is configured for providing a flow of the treated base material (1) in the forming system (130) as a substantially laminar flow.

7. The process according to any one of the preceding claims, wherein the treated base material (1) is discharged via the discharge port (129) in a direction substantially perpendicular to the transport direction (125).

8. The process according to any one of the preceding claims, further comprising adding an additive (9) to the base material (1) during one or more of the high shear stage and the forming stage.

9. The process according to any one of the preceding claims, wherein the forming system (130) comprises a plurality of forming elements (131), wherein the forming stage comprises: dividing the treated base material (1) from the discharge port (129) over the plurality of forming elements (131) and recombining the treated base material (1) exiting the plurality of forming elements (131), to provide the product (90) comprising the fibrous structure at the exit of the forming system (130).

10. The process according to any one of the preceding claims further comprising a preparation stage comprising mixing base material starter material (3) and a liquid (6) to provide the base material (1) for the transport stage.

11. A system (100) for production of a product (90) comprising a fibrous structure from a protein-comprising base material (1), wherein the system (100) comprises (i) a transport system (110), (ii) a high shear device (120) comprising a container (121) and temperature control system (126), wherein the container (121) comprises a high shear tool (124) configured rotatably around a rotational axis (127) and configured parallel to a longitudinal axis (128) of the container (121), and (iii) a forming system (130) comprising a forming temperature control system (136), wherein
- a first end (132) of the forming device (130) is fluidly connected to a discharge port (129) of the container (121), and a second end (139) of the forming device (130) is open,
- the transport system (110) is configured for (i) providing a base material (1) at a feed pressure (P_{f}) via an inlet port (122) into the container (121), transporting the base material (1) through the container (121) and discharging treated base material (1) at a discharge pressure (P_{d}) via a discharge port (129) from the container (121), and (ii) controlling a flow of the base material (1) in the container (121) by controlling a pressure difference between the feeding pressure (P_{f}) and the discharge pressure (P_{d}),
- the high shear tool (124) is configured for providing a specific mechanical energy to the base material (1) in the container (121) by shearing the base material (1) between a wall (123) of the container (121) and the high shear tool (124) and the temperature control system (126) is configured for controlling a shear stage temperature (Tₛ) of the base material (1) in the container (121), wherein the base material (1) is treated in the container (121),
- the high shear tool (124) comprises one or more shear elements (1241) extending along the rotational axis (127), wherein the shear element (1241) is configured at an angle of - 10°- +10° relative to the longitudinal axis (128) of the container (121), wherein the high shear tool (124) has an opening for facilitating an axial flow, wherein (i) the opening comprises a central channel defined within the one or more shear elements (1241) and/or (ii) the opening is defined between the shear elements (1241) and the rotational axis (127), wherein the high shear tool (124) blocks less than 50% of a cross-section (1231) of the container (121), and
- the forming temperature control system (136) is configured for controlling a forming temperature (T_{f}) of the treated base material (1) in the forming system (130).

12. The system (100) according to claim 11, wherein a minimal distance between the shear element (1241) and the wall (123) of the container (121) is 0.1-20 mm, wherein one or more of the high shear tool (124) and the container wall (123) comprises a temperature control element (1261), and wherein the container (121) optionally comprises a plurality of high shear tools (124) arranged parallel to each other.

13. The system (100) according to any one of the claims 11-12, wherein the forming system (130) comprise a plurality of forming elements (131) arranged parallel to each other, wherein the forming elements (131) are fluidly connected to each other at extremes of the forming elements.

14. The system (100) according to any one of the claims 11-13, further comprising a dosing system (160), wherein the dosing system (160) is fluidly connected to one or more of the container (121) and the forming system (130), for providing an additive to the base material (1) in the container (121) and/or to the treated base material in the forming system (131).

15. The system (100) according to any one of the claims 11-14, wherein the system (100) further comprises a measuring system (170) for measuring one or more of a flow of the base material (1) in the container (121), the shearing stage temperature (Tₛ), the forming temperature (T_{f}), a velocity of the treated base material (1) in the forming system (130), the specific mechanical energy provided to the base material (1), a density of the base material(1), a moisture content of the base material (1), a pressure in the container (121) and a pressure in the forming system (130), wherein the system (100) further comprises a control system (180) configured for controlling the transport system (110), the high shear device (120), and the forming system (130).

## Patentansprüche

1. Kontinuierliches Verfahren zur Herstellung eines Produkts (90), das eine Faserstruktur umfasst, aus einem Grundmaterial (1), wobei das Grundmaterial (1) ein proteinhaltiges Material (5) ist, wobei das Verfahren eine Förderstufe, eine Stufe mit hoher Scherkraft und eine Formgebungsstufe umfasst, wobei
- die Förderstufe umfasst: (i) Zuführen des Grundmaterials (1) mit einem Zuführdruck (P_{f}) in einen Behälter (121), (ii) Fördern des Grundmaterials (10) in einer Förderrichtung (125) durch den Behälter (121) und (iii) Ausstoßen von behandeltem Grundmaterial (1) aus dem Behälter (121), wobei Fördern des Grundmaterials (1) und Ausstoßen des behandelten Grundmaterials (1) auf der Grundlage einer Druckdifferenz zwischen dem Zuführdruck (P_{f}) und dem Ausstoßdruck (P_{d}) stehen, wobei ein Fluss des Grundmaterials (1) in dem Behälter (121) durch Steuern der Druckdifferenz zwischen dem Zuführdruck (P_{f}) und einem Ausstoßdruck (P_{d}) gesteuert wird,
- die Stufe mit hoher Scherkraft umfasst: während des Förderns des Grundmaterials (1) durch den Behälter (121) (i) Steuern einer Scherstufentemperatur (Tₛ) des Grundmaterials (1) in dem Behälter (121) und (ii) Zuführen einer spezifischen mechanischen Energie (SME) zu dem Grundmaterial (1), um das Grundmaterial (1) in dem Behälter (121) zu behandeln, wobei die spezifische mechanische Energie, die dem Grundmaterial (1) zugeführt wird, ausgewählt ist aus dem Bereich von 25 Whr - 400 Whr pro kg Grundmaterial (1), wobei die spezifische mechanische Energie (SME) durch Steuern einer Scherkraft, die dem Grundmaterial (1) zugeführt wird, als Funktion des Flusses des Grundmaterials (1) gesteuert wird, wobei die Scherkraft dem Grundmaterial (1) durch Drehen eines Werkzeugs mit hoher Scherkraft (124), das von dem Behälter (121) umfasst wird und um eine Drehachse (127) parallel zu einer Längsachse (128) des Behälters (121) angeordnet ist, zugeführt wird, wobei das Grundmaterial (1) zwischen einer Wand (123) des Behälters (121) und dem Werkzeug mit hoher Scherkraft (124) geschert wird, wobei höchstens 15 % einer Gesamtenergie, die zum Fördern des Grundmaterials (1) durch den Behälter (121) benötigt wird, durch das Werkzeug mit hoher Scherkraft (124) bereitgestellt wird und wobei die Scherstufentemperatur (Tₛ) auf einen Wert in dem Bereich von 65-150 °C eingestellt wird, und
- die Formgebungsstufe umfasst: Führen des Grundmaterials (1) aus dem Behälter (121) durch ein Formgebungssystem (130), während eine Formgebungstemperatur (T_{f}) des behandelten Grundmaterials (1) in dem Formgebungssystem (130) gesteuert wird, um das Produkt (90) an einem Ausgang (139) des Formgebungssystems (130) bereitzustellen.

2. Verfahren nach Anspruch 1, umfassend Einstellen von einem oder mehreren von dem Zuführdruck (F_{f}), der Scherstufentemperatur (Tₛ), der spezifischen mechanischen Energie (SME) und der Formgebungstemperatur (T_{f}) unabhängig voneinander.

3. Verfahren nach einem der vorstehenden Ansprüche, wobei wenigstens 50 Gew.-% des Grundmaterials (1) auf Trockenmassebasis Protein (2) umfassen, wobei die Scherstufentemperatur (Tₛ) so ausgewählt ist, dass sie das Protein (2) wenigstens teilweise denaturiert.

4. Verfahren nach Anspruch 3, wobei das Protein (2) ein Protein auf pflanzlicher Basis ist.

5. Verfahren nach einem der vorstehenden Ansprüche, wobei in der Stufe mit hoher Scherkraft eine Richtung einer Scherkraft (Fₛ), die auf das Grundmaterial (1) in dem Behälter ausgeübt wird, im Wesentlichen senkrecht zu der Förderrichtung (125) des Grundmaterials (1) ausgewählt wird.

6. Verfahren nach einem der vorstehenden Ansprüche, wobei das Produkt (90) das Formgebungssystem (130) bei Atmosphärendruck verlässt, wobei die Formgebungstemperatur (T_{f}) des Grundmaterials (1) in dem Formgebungssystem (130) zum Bereitstellen der Faserstruktur bei einer Temperatur unter 100 °C gesteuert wird, wobei das Verfahren zum Bereitstellen eines Flusses des behandelten Grundmaterials (1) in dem Formgebungssystem (130) als ein im Wesentlichen laminarer Fluss gestaltet ist.

7. Verfahren nach einem der vorstehenden Ansprüche, wobei das behandelte Grundmaterial (1) über die Ausstoßöffnung (129) in einer Richtung im Wesentlichen senkrecht zu der Förderrichtung (125) ausgestoßen wird.

8. Verfahren nach einem der vorstehenden Ansprüche, ferner umfassend Zugeben eines Additivs (9) zu dem Grundmaterial (1) während einer oder mehreren von der Stufe mit hoher Scherkraft und der Formgebungsstufe.

9. Verfahren nach einem der vorstehenden Ansprüche, wobei das Formgebungssystem (130) eine Vielzahl von Formgebungselementen (131) umfasst, wobei die Formgebungsstufe umfasst: Aufteilen des behandelten Grundmaterials (1) aus der Ausstoßöffnung (129) über die Vielzahl von Formgebungselementen (131) und Rekombinieren des behandelten Grundmaterials (1), das die Vielzahl von Formgebungselementen (131) verlässt, um das Produkt (90), das die Faserstruktur umfasst, an dem Ausgang des Formgebungssystems (130) bereitzustellen.

10. Verfahren nach einem der vorstehenden Ansprüche, ferner umfassend eine Herstellungsstufe, die Mischen von Grundmaterial-Ausgangsmaterial (3) und einer Flüssigkeit (6) umfasst, um das Grundmaterial (1) für die Förderstufe bereitzustellen.

11. System (100) zur Herstellung eines Produkts (90), das eine Faserstruktur umfasst, aus einem proteinhaltigen Grundmaterial (1), wobei das System (100) (i) ein Fördersystem (110), (ii) eine Vorrichtung mit hoher Scherkraft (120) umfassend einen Behälter (121) und ein Temperatursteuersystem (126), wobei der Behälter (121) ein Werkzeug mit hoher Scherkraft (124) umfasst, das drehbar um eine Drehachse (127) gestaltet ist und parallel zu einer Längsachse (128) des Behälters (121) gestaltet ist, und (iii) ein Formgebungssystem (130) umfassend ein Formgebungstemperatursteuersystem (136), umfasst, wobei
- ein erstes Ende (132) der Formgebungsvorrichtung (130) mit einer Ausstoßöffnung (129) des Behälters (121) in Fluidverbindung steht und ein zweites Ende (139) der Formgebungsvorrichtung (130) offen ist,
- das Fördersystem (110) gestaltet ist zum (i) Zuführen eines Grundmaterials (1) mit einem Zuführdruck (P_{f}) über eine Einlassöffnung (122) in den Behälter (121), Fördern des Grundmaterials (1) durch den Behälter (121) und Ausstoßen von behandeltem Grundmaterial (1) mit einem Ausstoßdruck (P_{d}) über eine Ausstoßöffnung (129) aus dem Behälter (121), und (ii) Steuern eines Flusses des Grundmaterials (1) in dem Behälter (121) durch Steuern einer Druckdifferenz zwischen dem Zuführdruck (P_{f}) und dem Ausstoßdruck (P_{d}),
- das Werkzeug mit hoher Scherkraft (124) gestaltet ist zum Zuführen einer spezifischen mechanischen Energie zu dem Grundmaterial (1) in dem Behälter (121) durch Scheren des Grundmaterials (1) zwischen einer Wand (123) des Behälters (121) und dem Werkzeug mit hoher Scherkraft (124), und das Temperatursteuersystem (126) gestaltet ist zum Steuern einer Scherstufentemperatur (Tₛ) des Grundmaterials (1) in dem Behälter (121), wobei das Grundmaterial (1) in dem Behälter (121) behandelt wird,
- das Werkzeug mit hoher Scherkraft (124) ein oder mehrere Scherelemente (1241) umfasst, die entlang der Drehachse (127) verlaufen, wobei das Scherelement (1241) in einem Winkel von -10°- +10° relativ zu der Längsachse (128) des Behälters (121) gestaltet ist, wobei das Werkzeug mit hoher Scherkraft (124) eine Öffnung zum Ermöglichen eines axialen Flusses aufweist, wobei (i) die Öffnung einen zentralen Kanal umfasst, der in dem einen oder den mehreren Scherelementen (1241) definiert ist, und/oder (ii) die Öffnung zwischen den Scherelementen (1241) und der Drehachse (127) definiert ist, wobei das Werkzeug mit hoher Scherkraft (124) weniger als 50 % eines Querschnitts (1231) des Behälters (121) blockiert, und
- das Formgebungstemperatursteuersystem (136) gestaltet ist zum Steuern einer Formgebungstemperatur (T_{f}) des behandelten Grundmaterials (1) in dem Umformsystem (130).

12. System (100) nach Anspruch 11, wobei ein Mindestabstand zwischen dem Scherelement (1241) und der Wand (123) des Behälters (121) 0,1-20 mm beträgt, wobei eines oder mehrere von dem Werkzeug mit hoher Scherkraft (124) und der Behälterwand (123) ein Temperatursteuerelement (1261) umfasst und wobei der Behälter (121) gegebenenfalls eine Vielzahl von Werkzeugen mit hoher Scherkraft (124) umfasst, die parallel zueinander angeordnet sind.

13. System (100) nach einem der Ansprüche 11-12, wobei das Formgebungssystem (130) eine Vielzahl von Formgebungselementen (131) umfasst, die parallel zueinander angeordnet sind, wobei die Formgebungselemente (131) an Enden der Formgebungselemente in Fluidverbindung miteinander stehen.

14. System (100) nach einem der Ansprüche 11-13, ferner umfassend ein Dosiersystem (160), wobei das Dosiersystem (160) mit einem oder mehreren von dem Behälter (121) und dem Formgebungssystem (130) in Fluidverbindung steht, um dem Grundmaterial (1) in dem Behälter (121) und/oder dem behandelten Grundmaterial in dem Formgebungssystem (131) ein Additiv zuzuführen.

15. System (100) nach einem der Ansprüche 11-14, wobei das System (100) ferner ein Messsystem (170) zum Messen von einem oder mehreren von einem Fluss des Grundmaterials (1) in dem Behälter (121), der Scherstufentemperatur (Tₛ), der Formgebungstemperatur (T_{f}), einer Geschwindigkeit des behandelten Grundmaterials (1) in dem Formgebungssystem (130), der spezifischen mechanischen Energie, die dem Grundmaterial (1) zugeführt wird, einer Dichte des Grundmaterials (1), einem Feuchtigkeitsgehalt des Grundmaterials (1), einem Druck in dem Behälter (121) und einem Druck in dem Formgebungssystem (130) umfasst, wobei das System (100) ferner ein Steuersystem (180) umfasst, das zum Steuern des Fördersystems (110), der Vorrichtung mit hoher Scherkraft (120) und des Formgebungssystems (130) gestaltet ist.

## Revendications

1. Procédé continu pour la fabrication d'un produit (90) comprenant une structure fibreuse à partir d'un matériau de base (1), le matériau de base (1) étant un matériau comprenant des protéines (5), le procédé comprenant une étape de transport, une étape de cisaillement élevé et une étape de formage, dans lequel
- l'étape de transport comprend : (i) la fourniture du matériau de base (1) à une pression d'alimentation (P_{f}) à l'intérieur d'un récipient (121), (ii) le transport du matériau de base (10) dans une direction de transport (125) à travers le récipient (121), et (iii) l'évacuation du matériau de base traité (1) du récipient (121), le transport du matériau de base (1) et l'évacuation du matériau de base traité (1) étant basés sur une différence de pression entre la pression d'alimentation (P_{f}) et une pression d'évacuation (P_{d}), un écoulement du matériau de base (1) dans le récipient (121) étant régulé par régulation de la différence de pression entre la pression d'alimentation (P_{f}) et la pression d'évacuation (P_{d}),
- l'étape de cisaillement élevé comprend : pendant le transport du matériau de base (1) à travers le récipient (121), (i) la régulation d'une température d'étape de cisaillement (Tₛ) du matériau de base (1) dans le récipient (121) et (ii) la fourniture d'une énergie mécanique spécifique (SME) au matériau de base (1), pour traiter le matériau de base (1) dans le récipient (121), l'énergie mécanique spécifique fournie au matériau de base (1) étant choisie dans la plage de 25 Wh à 400 Wh par kg de matériau de base (1), l'énergie mécanique spécifique (SME) étant régulée par régulation d'une force de cisaillement appliquée au matériau de base (1) en fonction de l'écoulement du matériau de base (1), la force de cisaillement étant appliquée au matériau de base (1) par rotation d'un outil de cisaillement élevé (124) constitué par le récipient (121) et disposé autour d'un axe de rotation (127) parallèle à un axe longitudinal (128) du récipient (121), le matériau de base (1) étant cisaillé entre une paroi (123) du récipient (121) et l'outil de cisaillement élevé (124), 15 % maximum d'une énergie totale nécessaire pour transporter le matériau de base (1) à travers le récipient (121) étant fournie par l'outil de cisaillement élevé (124), et la température d'étape de cisaillement (Tₛ) étant réglée à une valeur dans la plage de 65-150 °C, et
- l'étape de formage comprend : le guidage du matériau de base (1) à partir du récipient (121) à travers un système de formage (130) tout en régulant une température de formage (T_{f}) du matériau de base traité (1) dans le système de formage (130), pour délivrer le produit (90) à une sortie (139) du système de formage (130).

2. Procédé selon la revendication 1, comprenant le réglage d'un ou plusieurs paramètres parmi la pression d'alimentation (F_{f}), la température d'étape de cisaillement (Tₛ), l'énergie mécanique spécifique (SME) et la température de formage (T_{f}) indépendamment les uns des autres.

3. Procédé selon l'une quelconque des revendications précédentes, dans lequel au moins 50 % en poids du matériau de base (1) sur la base de matière sèche comprend une protéine (2), la température d'étape de cisaillement (Tₛ) étant choisie pour dénaturer au moins partiellement la protéine (2).

4. Procédé selon la revendication 3, dans lequel la protéine (2) est une protéine d'origine végétale.

5. Procédé selon l'une quelconque des revendications précédentes dans lequel, à l'étape de cisaillement élevé, une direction d'une force de cisaillement (Fₛ) appliquée au matériau de base (1) dans le récipient est choisie sensiblement perpendiculaire à la direction de transport (125) du matériau de base (1).

6. Procédé selon l'une quelconque des revendications précédentes, dans lequel le produit (90) sort du système de formage (130) à la pression atmosphérique, la température de formage (T_{f}) du matériau de base (1) dans le système de formage (130) étant régulée pour fournir la structure fibreuse à une température inférieure à 100 °C, le procédé étant conçu pour fournir un écoulement du matériau de base traité (1) dans le système de formage (130) sous la forme d'un écoulement sensiblement laminaire.

7. Procédé selon l'une quelconque des revendications précédentes, dans lequel le matériau de base traité (1) est évacué par le biais de l'orifice d'évacuation (129) dans une direction sensiblement perpendiculaire à la direction de transport (125).

8. Procédé selon l'une quelconque des revendications précédentes, comprenant en outre l'ajout d'un additif (9) au matériau de base (1) pendant l'étape de cisaillement élevé et/ou l'étape de formage.

9. Procédé selon l'une quelconque des revendications précédentes, dans lequel le système de formage (130) comprend une pluralité d'éléments de formage (131), l'étape de formage comprenant : la division du matériau de base traité (1) depuis l'orifice d'évacuation (129) sur la pluralité d'éléments de formage (131), et la recombinaison du matériau de base traité (1) sortant de la pluralité d'éléments de formage (131), pour délivrer le produit (90) comprenant la structure fibreuse à la sortie du système de formage (130).

10. Procédé selon l'une quelconque des revendications précédentes, comprenant en outre une étape de préparation comprenant le mélange d'un matériau de départ (3) pour le matériau de base et d'un liquide (6) pour fournir le matériau de base (1) pour l'étape de transport.

11. Système (100) pour la fabrication d'un produit (90) comprenant une structure fibreuse à partir d'un matériau de base comprenant des protéines (1), le système (100) comprenant (i) un système de transport (110), (ii) un dispositif de cisaillement élevé (120) comprenant un récipient (121) et un système de régulation de température (126), le récipient (121) comprenant un outil de cisaillement élevé (124) conçu avec faculté de rotation autour d'un axe de rotation (127) et conçu parallèle à un axe longitudinal (128) du récipient (121), et (iii) un système de formage (130) comprenant un système de régulation de température de formage (136), dans lequel
- une première extrémité (132) du dispositif de formage (130) est raccordée fluidiquement à un orifice d'évacuation (129) du récipient (121), et une deuxième extrémité (139) du dispositif de formage (130) est ouverte,
- le système de transport (110) est conçu pour (i) fournir un matériau de base (1) à une pression d'alimentation (P_{f}) par le biais d'un orifice d'entrée (122) à l'intérieur du récipient (121), transporter le matériau de base (1) à travers le récipient (121) et évacuer le matériau de base traité (1) à une pression d'évacuation (P_{d}) par le biais d'un orifice d'évacuation (129) du récipient (121), et (ii) réguler un écoulement du matériau de base (1) dans le récipient (121) par régulation d'une différence de pression entre la pression d'alimentation (P_{f}) et la pression d'évacuation (P_{d}),
- l'outil de cisaillement élevé (124) est conçu pour fournir une énergie mécanique spécifique au matériau de base (1) dans le récipient (121) par cisaillement du matériau de base (1) entre une paroi (123) du récipient (121) et l'outil de cisaillement élevé (124), et le système de régulation de température (126) est conçu pour réguler une température d'étape de cisaillement (Tₛ) du matériau de base (1) dans le récipient (121), le matériau de base (1) étant traité dans le récipient (121),
- l'outil de cisaillement élevé (124) comprend un ou plusieurs éléments de cisaillement (1241) s'étendant le long de l'axe de rotation (127), l'élément de cisaillement (1241) étant conçu à un angle de -10° à +10° par rapport à l'axe longitudinal (128) du récipient (121), l'outil de cisaillement élevé (124) comportant une ouverture destinée à faciliter un écoulement axial, dans lequel (i) l'ouverture comprend un canal central défini à l'intérieur du ou des éléments de cisaillement (1241) et/ou (ii) l'ouverture est définie entre les éléments de cisaillement (1241) et l'axe de rotation (127), l'outil de cisaillement élevé (124) bloquant moins de 50 % d'une section transversale (1231) du récipient (121), et
- le système de régulation de température de formage (136) est conçu pour réguler une température de formage (T_{f}) du matériau de base traité (1) dans le système de formage (130).

12. Système (100) selon la revendication 11, dans lequel une distance minimale entre l'élément de cisaillement (1241) et la paroi (123) du récipient (121) est de 0,1-20 mm, dans lequel l'outil de cisaillement élevé (124) et/ou la paroi de récipient (123) comprennent un élément de régulation de température (1261), et dans lequel le récipient (121) comprend éventuellement une pluralité d'outils de cisaillement élevé (124) disposés parallèlement les uns aux autres.

13. Système (100) selon l'une quelconque des revendications 11 et 12, dans lequel le système de formage (130) comprend une pluralité d'éléments de formage (131) disposés parallèlement les uns aux autres, les éléments de formage (131) étant raccordés fluidiquement les uns aux autres à des extrémités des éléments de formage.

14. Système (100) selon l'une quelconque des revendications 11 à 13, comprenant en outre un système de dosage (160), le système de dosage (160) étant raccordé fluidiquement au récipient (121) et/ou au système de formage (130), pour apporter un additif au matériau de base (1) dans le récipient (121) et/ou au matériau de base traité dans le système de formage (131).

15. Système (100) selon l'une quelconque des revendications 11 à 14, le système (100) comprenant en outre un système de mesure (170) destiné à mesurer un ou plusieurs paramètres parmi un écoulement du matériau de base (1) dans le récipient (121), la température d'étape de cisaillement (Tₛ), la température de formage (T_{f}), une vitesse du matériau de base traité (1) dans le système de formage (130), l'énergie mécanique spécifique fournie au matériau de base (1), une masse volumique du matériau de base (1), un taux d'humidité du matériau de base (1), une pression dans le récipient (121) et une pression dans le système de formage (130), le système (100) comprenant en outre un système de commande (180) conçu pour commander le système de transport (110), le dispositif de cisaillement élevé (120) et le système de formage (130).
